# EUROPÄISCHE PATENTSCHRIFT

(11) **EP 1 784 277 B1**
(45) Veröffentlichungstag und Bekanntmachung des Hinweises auf die Patenterteilung: **11.05.2011**
(21) Anmeldenummer: 05772704.2
(22) Anmeldetag: 18.08.2005
(51) Int. Cl.: B23K 26/32

(54) **ÜBERLAPPSCHWEISSVERFAHREN MITTELS STRAHLSCHWEISSUNG, INSBESONDERE MITTELS LASERSTRAHLSCHWEISSUNG AN BESCHICHTETEN BLECHEN, INSBESONDERE AN VERZINKTEN STAHLBLECHEN**
LAP WELDING METHOD BY MEANS OF BEAM WELDING, PARTICULARLY LASER BEAM WELDING ON COATED METAL SHEETS, ESPECIALLY GALVANIZED STEEL SHEETS
PROCEDE DE SOUDAGE PAR RECOUVREMENT PAR RAYONNEMENT, NOTAMMENT PAR RAYONS LASER, SUR DES TOLES ENDUITES, NOTAMMENT DES TOLES D'ACIER GALVANISE

(30) Priorität: 27.08.2004 DE 102004041502
(43) Veröffentlichungstag der Anmeldung: 16.05.2007
(73) Patentinhaber: AUDI AKTIENGESELLSCHAFT, 85045 Ingolstadt (DE); BLZ BAYERISCHES LASERZENTRUM GEMEINNÜTZIGE FORSCHUNGSGES. MBH, 91052 Erlangen (DE)
(72) Erfinder: BLOEHS, Wolfgang, 85049 Ingolstadt (DE); OTTO, Andreas, 90537 Feucht (DE); SCHMIDT, Michael, 91054 Erlangen (DE); ALBERT, Florian, 90762 Fürth (DE); ESSER, Gerd, 91056 Erlangen (DE); GEIGER, Manfred, 91431 Röttenbach (DE)
(74) Vertreter: Geissler, Manfred
(86) Internationale Anmeldenummer: PCT/EP2005/008961
(87) Internationale Veröffentlichungsnummer: WO 2006/024404

(56) Entgegenhaltungen:
- EP-A- 0 564 995
- DE-C1- 3 812 448

## Beschreibung

Die Erfindung betrifft ein Überlappschweißverfahren mittels Strahlschweißung nach dem Oberbegriff des Anspruchs 1.

Beim Überlappschweißverfahren liegen wenigstens zwei Bleche in einem Überlappungsbereich übereinander und werden durch einen Energieeintrag und Aufschmelzen des Blechmaterials und nachfolgender Abkühlung miteinander verbunden. Dazu werden insbesondere im Fahrzeugkarosseriebau neben dem allgemein bekannten Widerstandspunktschweißen zunehmend Strahlschweißverfahren eingesetzt, wobei die Schweißenergie über einen gesteuerten Energiestrahl zugeführt wird. Besondere Bedeutung kommt vermehrt dem Laserstrahlschweißen zu mit den Vorteilen eines minimalen Schweißverzugs, hoher Schweißgeschwindigkeiten, großer Struktursteifigkeit und hoher Maßhaltigkeit. Als weitere Strahlschweißverfahren kommen beispielsweise auch Elektronenstrahlschweißverfahren und Plasmastrahlschweißverfahren zum Einsatz.

Beim allgemein bekannten Laserstrahlschweißvorgang wird ein Schmelzbad gebildet, das entsprechend der Schweißgeschwindigkeit entlang einer Schweißnaht gezogen wird und das sich durch den Blechwerkstoff des oberen Blechs in den Blechwerkstoff des unteren Blechs erstreckt. Dabei wird ein Teil des Schmelzbades verdampft und es entsteht eine Dampfkapillare (Keyhole), die durch und mit dem Schmelzbad entlang der Schweißnaht gezogen wird. Es handelt sich dabei um einen durch prozessbedingte Veränderungen in der Verdampfungsrate und dem Umgebungsdruck dynamischen Vorgang, wobei die Dampfkapillare auch zum Kollabieren neigen kann, dann verbunden mit erheblichen Schweißfehlern, wie Spritzern, Auswürfen, Poren und ungenügender Ein-/Durchschweißung. Eine schwingende Dampfkapillare emittiert aufgrund des enthaltenen ionisierten Metalldampfplasmas elektromagnetische Strahlung, welche durch geeignete Messaufbauten, insbesondere optische Messungen erfasst und analysiert werden kann. Damit kann auch ein Resonanzbereich der schwingenden Dampfkapillare ermittelt werden, in dem die Dampfkapillare so stark schwankt, dass sie regelmäßig mit chaotischer Kapillarschwingung kollabiert, was zu erheblichen Schweißfehlern führt.

Solche Resonanzbereiche liegen je nach den Randbedingungen, wie Materialart und -stärke, Laserleistung, etc., für einen konkreten Schweißprozess etwa im Kilohertzbereich und können entsprechend dem vorgenannten Verfahren empirisch ermittelt werden.

Es hat sich gezeigt, dass durch eine Anregung von außen eine an sich instabile und chaotische Kapillarschwingung, die zu erheblichen Schweißfehlern führt, in ein System mit stabilisierter Dynamik überführt werden kann, das wesentlich bessere Schweißergebnisse liefert. Dazu ist es bekannt (WO 02060634 A1), die Laserleistung periodisch mit der empirisch ermittelten Resonanzfrequenz der Dampfkapillare zu variieren. Dies beruht auf der Überlegung, dass einem schwingungsfähigen System durch Anregung in seiner Resonanzfrequenz sehr effizient Energie zugeführt werden kann, so dass es stabile Schwingungen bei einer Stabilisierung des Schweißprozesses in der Resonanzfrequenz ausführt. Überlappschweißungen mit einem solchen Laserstrahlschweißverfahren sind bei unbeschichteten Blechen, welche ohne Fügespalt im Überlappungsbereich plan aneinander liegen, mit guten Schweißergebnissen einfach beherrschbar.

Erhebliche grundsätzliche Probleme treten jedoch bei Überlappschweißungen mit Strahlschweißverfahren, insbesondere mit Laserstrahlschweißverfahren, an beschichteten Blechen auf, wobei die Beschichtung eine wesentlich niedrigere Schmelz- und Verdampfungs- bzw. Verbrennungstemperatur als der Blechwerkstoff aufweist, wenn im Überlappungsbereich die beschichteten Gegenflächen ohne einen Fügespalt plan aufeinander liegen. Bereichsweise bzw. mikroskopisch gesehen tritt dieser Effekt auch bei gekrümmten Blechen auf, wenn die Passung der zu verbindenden Bleche in der Fügezone entsprechend spaltfrei ist. Zum wirkungsvollen Schutz gegen Korrosion werden insbesondere im Karosseriebau beschichtete Bleche als zinkbeschichtete Stahlbleche verwendet, bei denen im Zusammenhang mit Laserstrahlschweißungen die schweißtechnische Beherrschung in der Serienfertigung erheblichen Aufwand verursacht:

Während des Schweißprozesses erreicht der Stahl des Stahlblechs in der Schweißzone mindestens die Schmelztemperatur, welche bei unlegierten Stählen im allgemeinen etwa bei 1450°C liegt. Die Zinkbeschichtung besitzt einen Schmelzpunkt von 420°C und eine Verdampfungstemperatur von 907°C. Beim Schweißvorgang im Überlappbereich, insbesondere bei plan bzw. formangepasst aneinander liegenden beschichteten Gegenflächen, führt zwischen den Blechen die dortige Verdampfung des Zinks und seine anschließende Überhitzung zu einer enormen Volumen- und Druckzunahme. Von entscheidendem Einfluss ist hierbei die absolute Menge des im Spalt befindlichen Beschichtungsmaterials (Gesamtschichtdicke) unabhängig, ob nur eine Blechoberfläche oder beide Blechoberflächen innerhalb der Fügeebene beschichtet sind. Dabei strömt der expandierende Zinkdampf unter hohem Druck und mit hoher Geschwindigkeit durch das Schmelzbad ins Freie, welches den Weg des geringsten Ausströmwiderstandes darstellt, was zu massiven Auswürfen und Nahtfehlern führt - eine so hergestellte Laserstrahlschweißnaht führt weder zu einer stabilen mechanischen Verbindung noch zu einer optisch akzeptablen Schweißnaht und ist daher praktisch nicht einsetzbar.

Ausgehend von den vorstehenden Erfahrungen bei Überlappschweißungen mit Laserstrahlverfahren bei verzinkten Stahlblechen, wenn diese im Überlappungsbereich ohne Fügespalt plan bzw. formangepasst aufeinander liegen, sind bereits Maßnahmen bekannt, mit denen die Schweißnahtqualität verbessert werden kann:

Bei bekannten aufwendigen Verfahren (WO 9529033 A1; EP 365229 A1) wird die Beschichtung vor dem Laserschweißvorgang lokal im Überlappbereich, dort wo die sonst beschichteten Gegenflächen aneinander liegen, entfernt. Dadurch wird von vorneherein das ursächliche Problem vermieden, dass ein expandierender Zinkdampf zwischen den Blechen überhaupt erzeugt wird, der durch das Schmelzbad austritt. Damit wird der Schweißvorgang auf das gut beherrschbare Laserstrahlschweißverfahren mit unbeschichteten Blechen bei einem Null-Fügespalt, d. h. im Überlappbereich aneinander liegenden Blechen zurückgeführt. Nachteilig ist hier die äußerst aufwendige Entfernung der Beschichtung im Überlappbereich sowie der Verlust des Korrosionsschutzes durch die dann fehlende Beschichtung im Schweißbereich.

Bei einer weiter bekannten Methode zur Verbesserung der Schweißnahtqualität der vorstehenden Überlappschweißung bei verzinkten Blechen (US 4684779 A1; WO 9102621 A1) wird versucht, durch das Aufbringen eines Schutz-/Arbeitsgases mit hohem Druck auf das Schmelzbad das Austreten von expandierendem Zinkdampf durch das Schmelzbad zu verhindern oder zumindest weitgehend zu reduzieren. Dies ist ein aufwendiges Verfahren, das zudem bei plan bzw. formangepasst aneinander liegenden, beschichteten, überlappenden Gegenflächen das eruptive Austreten von expandierendem Zinkdampf durch das Schmelzbad nur bedingt verhindern kann. Diese gerätetechnisch aufwendige Maßnahme ist zudem mit einem kostenintensiven Gasverbrauch verbunden und hat sich aufgrund der beschränkten Eignung für spezielle Einzelfallanwendungen in der industriellen Anwendung bisher nicht durchsetzen können.

Eine weitere bekannte Maßnahme zur Verbesserung der Schweißnahtqualität bei den vorstehenden Schweißbedingungen (WO 0066314 A1) besteht darin, zwei Laserstrahlen in einer Doppelfokusanordnung zu verwenden, welche beide in einem geringen Abstand entland der Schweißnaht in ein damit vergrößertes Schmelzbad strahlen. Dadurch sollen die Austrittsfläche und die Austrittzeit für den aus dem Schmelzbad expandieren Zinkdampf vergrößert werden. Der Durchtritt ins Freie soll dadurch weniger heftig erfolgen und zu einer Reduzierung von Auswürfen und Nahtfehlern führen. Die im Einzelfall denkbaren Prozessverbesserungen sind allerdings in der Regel nur auf Kosten einer verringerten Vorschubgeschwindigkeit und damit verbunden geringeren Wirtschaftlichkeit zu erzielen. Außerdem ist bekanntermaßen die Dynamik der Dampfkapillare u.a. von Materialart und -dicke, Beschichtungsdicke, Vorschubgeschwindigkeit, Laserleistung usw. abhängig. Daher ist nicht zu erwarten, dass mit einer starren Multi-Fokus-Anordnung verbesserte Schweißergebnisse bei unterschiedlichen Bearbeitungsbedingungen - wie sie typisch für die einzelnen Arbeitsoperationen in der Automobilfertigung sind - zu erzielen sind. Es würde sich vielmehr um eine Optikkonfiguration handeln, die auf einen einzigen speziellen Anwendungsfall optimiert ist (single use optic), und bei anderen Bearbeitungssituationen keinen positiven Effekt hätte. Alternativ wäre sicher auch eine adaptive, verstellbare Doppelfokusanordnung denkbar, wobei diese Maßnahme ersichtlich aufwendig wäre. Generell hat das Schweißen von beschichteten Stahlblechen mit Doppelfokusanordnung aufgrund des bisher fehlenden Nachweises einer breiten, durchgreifenden Stabilisierung des Schweißprozesses noch keinen Eingang in die industrielle Produktion gefunden.

Die derzeit insbesondere im Fahrzeugbau gängige und bewährte Maßnahme zur Optimierung der Schweißnahtqualität bei Überlappschweißungen von verzinkten Stahlblechen mit Laserstrahlschweißverfahren besteht darin, eine kontrollierte Entgasung des Zinkdampfs aus dem Überlappungsbereich der gegenüberliegenden Gegenflächen durch die Schaffung eines Entgasungsraums herbeizuführen, so dass die Zinkentgasung aus dem Zwischenraum zwischen den Blechen nicht oder nur sehr wenig durch das Schmelzbad erfolgt. Zur Schaffung eines solchen Entgasungsraums sind bereits eine Vielzahl von Vorschlägen bekannt, die alle darauf hinauslaufen, vor dem Schweißvorgang hergestellte Spalte und/oder Radienzwickel und/oder Kanäle an oder in unmittelbarer Nähe der Schweißstelle vorzusehen. Insbesondere werden solche Entgasungsraumstrukturen durch Einprägungen mit punktuellen Anlagestellen und/oder Aufkantungen und/oder unterschiedlichen Wölbungen im Überlappbereich hergestellt. Beispielsweise wird aus der Vielzahl der dazu vorhandenen Veröffentlichungen auf die Dokumente DE 38 12 448 C1; DE 39 33 408 C2; EP 421091 B1; US 5104032 A1; US 4682002 A1; WO 04024385 A1; WO 03066273 A1; WO 0198017 A1; WO 0112378 A1; US 6359252 B1; EP 748268 B1; EP 771605 A2; EP 157913 A1; WO 9011161 A1; US 4916284 A1; DE 101 59 459 B4; DE 102 45 352 B3; EP 1422016 A2; EP 1372901 A1; EP 1003624 A1; EP 1005944 hingewiesen.

Aufgrund der vorstehenden Gegebenheiten ist es dem Fachmann für Laserstrahlschweißverfahren seit langem aus dem Stand der Technik bekannt, dass den durch ein eruptives Ausgasen von expandierendem Zinkdampf durch das Schmelzbad möglichen Problemen beim Überlappschweißen verzinkter Stahlbleche dadurch begegnet werden kann, dass
a) definierte Entgasungsräume als Spalte, Radienzwickel oder Kanäle mit definierten Spaltweiten von etwa 0,2 ± 0,1 mm geschaffen werden. Die untere Grenze für die Spaltweite liegt bei etwa 0,1 mm, da bei noch kleinerer Spaltweite keine kontrollierte Entgasung des Zinkdampfs durch den Spalt mehr möglich ist und die Entgasung dann durch das Schmelzbad erfolgt - bei Spaltweiten über etwa 0,3 mm (im Einzelfall auch 0,6 mm möglich) ergibt sich dagegen ein starker Schweißnahteinfall mit einer Verschlechterung der mechanischen Schweißnahteigenschaften. Der Aufwand für die Gewährleistung eines solchen Spalts innerhalb der vorstehenden engen Grenzen in Verbindung mit der vorbereitenden Blechbearbeitung und der erforderlichen Spanntechnik ist unabhängig von der jeweils verwendeten konkreten Maßnahme, insbesondere in der Großserienfertigung von Karosserien und Karosseriebauteilen erheblich und sehr kostenintensiv.
b) regelmäßig noch aufwendigere Maßnahmen, wie das Vorsehen von Schutzgas-Druckatmosphären über dem Schmelzbad oder angepassten Doppellaserstrahlanordnungen sind erforderlich, wenn keine solchen definierten Entgasungsspalte innerhalb der vorstehenden Spaltweitengrenzen geschaffen sind. Diese Maßnahmen bedingen zudem meist ungünstig geringe Schweißgeschwindigkeiten und werden bislang industriell nicht eingesetzt. Eine besonders aufwendige jedoch nachteilige Möglichkeit besteht in der Entfernung der Zinkbeschichtung und damit einem Verlust des Korrosionsschutzes im Schweißbereich.

Ausgehend von diesem Hintergrund liegt die Aufgabe der Erfindung darin, ein gattungsgemäßes Überlappschweißverfahren mittels Strahlschweißung so weiterzubilden, dass mit einfachen kostengünstigen Maßnahmen Schweißnähte wirtschaftlich mit guter Nahtqualität hinsichtlich der mechanischen und optischen Nahteigenschaften herstellbar sind.

Diese Aufgabe wird gelöst mit den Merkmalen des Anspruchs 1.

Gemäß Anspruch 1 liegt beim Überlappschweißvorgang ein Null-Fügespalt mit plan bzw. formangepasst aneinander liegenden Gegenflächen im Überlappungs- und Schweißbereich vor. Die jeweiligen Parameter des Energiestrahls werden mit einer speziellen Anregungsfrequenz variiert, wobei diese in einem Frequenzfenster i.d.R. um eine Eigenfrequenz der beim Schweißvorgang im Schmelzbad gebildeten Dampfkapillare liegt und wobei diese innerhalb dieses Frequenzfensters zeitlich variiert wird.

Erfindungsgemäß ist somit die Schaffung und Einhaltung eines Entgasungsraums innerhalb engen Grenzen nicht erforderlich, was zu einer wesentlichen Vereinfachung und Kostenreduzierung führt. Nur durch die Variation der Parameter, z. B. der Intensität des Energiestrahls mit einer speziellen bzw. definierten, vorgegebenen Anregungsfrequenz ist es ohne Entgasungsraum möglich, Schweißnähte mit guter Nahtqualität hinsichtlich der mechanischen und optischen Nahteigenschaften herzustellen. Dazu ist es wesentlich, dass die Anregungsfrequenz in einem Fenster um eine spezielle Frequenz der schwingenden Dampfkapillare liegt, wobei diese Eigenfrequenz empirisch, wie eingangs erwähnt, ermittelt werden kann.

Eine Anregung des Energiestrahls nur mit der Resonanzfrequenz führt zu keinen befriedigenden Ergebnissen (Resonanzkatastrophe), da dabei wegen des eruptiven Ausgasens von Beschichtungsdampf durch das Schmelzbad hindurch die vorstehend beschriebenen Schweißfehler, wie Spritzer, Auswürfe, Poren, usw. mit ungenügender Schweißnahtqualität auftreten. Überraschend hat sich jedoch gezeigt, dass bei einer Variation der Anregungsfrequenz in einem Frequenzfenster um die Resonanzfrequenz als spezieller Eigenfrequenz eine Stabilisierung des Schweißvorgangs erhalten wird, wobei die Entgasung des Beschichtungsdampfs durch das Schmelzbad gleichmäßig und so beruhigt erfolgt, dass die vorstehenden Schweißfehler nicht auftreten oder zumindest so weit reduziert sind, dass eine für übliche Anwendungsfälle gute Schweißqualität hinsichtlich der mechanischen Stabilität und eines gleichmäßigen Schweißnahtbildes erhalten wird. Ein Null-Spalt ist mit einer entsprechenden Spanntechnik verhältnismäßig einfach herzustellen, wobei gute Schweißergebnisse noch bis zu einer gewissen Plustoleranz des Null-Spalts bis etwa 0,6 mm zu erreichen sind.

Gemäß Anspruch 2 stehen mehrere Möglichkeiten für die Variation der Einstellparameter des Energiestrahls zur Verfügung. Die bevorzugte Variation erfolgt durch Variation der Strahlleistung, bei einem Laserverfahren durch Variation der Laserstrahlleistung. Alternative und/oder zusätzliche Variationsmöglichkeiten bestehen in der Variation des Strahldurchmessers, insbesondere der Fokuslage bei einem Laserstrahl, und/oder der absorbierten Energie, insbesondere durch eine Variation der Polarisation bei einem Laserstrahl, und/oder der räumlichen und zeitlichen Lage des Laserstrahls sowie der räumlichen und zeitlichen Intensitätsverteilung innerhalb des Laserstrahls, und/oder des Einstrahlwinkels. Diese Variation erfolgt durch Änderung der jeweiligen Anregungsfrequenz. Solche Variationen der Energiestrahlparameter erfordern i.d.R. nur einen geringen apparativen und steuerungstechnischen Aufwand.

Gemäß Anspruch 3 können die Parameter des Energiestrahls je nach den Gegebenheiten insgesamt mit der jeweiligen Anregungsfrequenz variiert werden oder das Verfahren wird mit einer bestimmten kontinuierlichen Grundintensität des Energiestrahls betrieben, dem eine mit der Anregungsfrequenz variierende Zusatzintensität überlagert wird.

Für das vorliegende Verfahren ist es erforderlich, die Resonanzfrequenz der Dampfkapillare für einen konkreten Schweißfall mit jeweils bestimmten vorliegenden Randbedingungen zu kennen, da diese Anregungsfrequenz im Frequenzfenster, vorzugsweise etwa in einem mittleren Bereich dieses Frequenzfensters liegen soll.

Zur Ermittlung der Eigenfrequenz gemäß Anspruch 4 wird für unbeschichtete Bleche vorgeschlagen, die Eigenfrequenz empirisch dergestalt zu ermitteln, dass Schweißvorgänge mit unterschiedlichen Intensitätsfrequenzen des Energiestrahls ausgeführt werden. Die Frequenz, bei der eine maximale Energieübertragung erfolgt, was beispielsweise durch optische Beobachtung des Metalldampfplasmas ermittelt werden kann, wird als Eigenfrequenz erkannt und dem erfindungsgemäßen Verfahren zugrundegelegt. Alternativ hierzu können die emittierten Signale eines Schweißprozesses ohne externe Anregung aufgenommen werden. Aus den gewonnenen Daten lässt sich dann die "natürliche" Dynamik des Schweißprozesses ermitteln, wobei die (lokalen) Maxima die Eigenfrequenzen des Prozesses repräsentieren. Die jeweilige Größe der Eigenfrequenz hängt von konkreten Randbedingungen, wie den Blechdicken, der Materialart, der Schweißtiefe, etc. ab. Da bei Serienfertigungen vieler gleicher Bauteile jeweils gleiche Randbedingungen vorliegen, reicht es aus, eine solche Eigenfrequenz für alle diese Schweißvorgänge nur einmal zu ermitteln. Auf Wechsel der Bearbeitungsbedingungen kann dann i.d.R. durch einfaches Anpassen der elektrischen Steuerungsparameter reagiert werden.

Gute Schweißergebnisse sind gemäß Anspruch 5 erzielt worden, wenn die Breite des Frequenzfensters um die jeweilige Anregungsfrequenz etwa um eine Zehnerpotenz geringer ist als die Größe der jeweiligen Eigenfrequenz. Bei einer ermittelten Eigenfrequenz von 2000 Hz wäre somit ein Frequenzfenster in der Breite von etwa 200 Hz zu wählen.

Je nach den Gegebenheiten können nach Anspruch 6 auch feste vorgegebene Fensterbreiten verwendet werden, die nicht an die Größe der Eigenfrequenz unmittelbar gekoppelt sind und in einer Größe von 400 Hz, bevorzugt 200 Hz und besonders bevorzugt von 100 Hz liegen.

Nach Anspruch 7 sind gute Schweißergebnisse zu erzielen, wenn die Variation der Anregungsfrequenz innerhalb des Frequenzfensters durch eine zeitlich periodisch in einem Variationszyklus verlaufende Frequenzverschiebung erfolgt, welche gemäß Anspruch 8 insbesondere durch eine auf die spezielle Anregungsfrequenz modulierte Änderungsfrequenz erzielt werden kann. Dabei sollen die Zeiten für einen periodischen Variationszyklus gemäß Anspruch 9 in der Grössenordnung von Millisekunden liegen.

Alternativ zu der vorstehenden Maßnahme für einen periodischen Variationszyklus wird mit Anspruch 10 eine Variation der Anregungsfrequenz nach dem Zufallsprinzip verwendet, wobei mittels eines Zufallsgenerators sukzessive auf jeweils eine vorbestimmte Frequenz aus dem Frequenzfenster weitergeschaltet wird. Diese Weiterschaltung kann nach Anspruch 11 jeweils nach einer voreingestellten Zeitspanne im Mikrosekundenbereich erfolgen oder nach Anspruch 11 ebenfalls nach dem Zufallsprinzip aus einem Zeitfenster von 0 bis wenigen Millisekunden ausgewählt werden.

Ziel der vorstehenden Weiterschaltungen und Umschaltungen und der periodischen Variationszyklen für die Anregungsfrequenz innerhalb des Frequenzfensters ist es, einerseits die Anregung effektiv und gut steuerbar im Bereich der Eigenfrequenz durchzuführen aber andererseits der Resonanzkatastrophe durch ein ständiges Aufschwingen der Dampfkapillare zu entgehen und dabei zudem ein weitgehend gleichmäßiges Entgasen von Beschichtungsdampf durch das Schmelzbad zu ermöglichen.

Besonders vorteilhaft ist das erfindungsgemäße Überlappschweißverfahren gemäß Anspruch 13 bei verzinkten Stahlblechen einsetzbar. Das Überlappschweißverfahren ist mit guter Schweißqualität auch bei anderen beschichteten Blechen verwendbar, bei denen die Beschichtung eine niedrigere Schmelz- und Verdampfungs- bzw. Verdampfungstemperatur als der Blechwerkstoff aufweist, da dort im wesentlichen die gleichen Probleme wie bei verzinkten Stahlblechen auftreten.

Besonders vorteilhaft ist ein Laserstrahlschweißverfahren mit einem CO₂-Laser einsetzbar, wobei jedoch je nach den Gegebenheiten auch Faserlaser, Diodenlaser oder Festkörperlaser verwendbar sind. Grundsätzlich ist das erfindungsgemäße Überlappschweißverfahren auch mit anderen Strahlschweißverfahren, wie Elektronenstrahlschweißverfahren oder Plasmastrahlschweißverfahren mit guten Schweißergebnissen verwendbar.

## Patentansprüche

1. Überlappschweißverfahren mittels Strahlschweißung an beschichteten Blechen,
wobei die Beschichtung eine wesentlich niedrigere Schmelz- und Verdampfungs- oder Verbrennungstemperatur als der Blechwerkstoff aufweist und im Überlappungsbereich mindestens eine beschichtete Gegenflächen mit einem Fügespalt vorliegt,
**dadurch gekennzeichnet,**
**dass** mindestens ein Null-Fügespalt mit plan oder formangepasst aneinander liegenden Gegenflächen im Überlappungs- und Schweißbereich vorliegt,
**dass** die jeweiligen Parameter des Energiestrahls mit einer Anregungsfrequenz in einem Frequenzfenster um eine spezielle Anregungsfrequenz der beim Schweißvorgang im Schmelzbad gebildeten Dampfkapillare liegt und die Anregungsfrequenz innerhalb dieses Frequenzfensters zeitlich variiert wird.

2. Überlappschweißverfahren nach Anspruch 1, **dadurch gekennzeichnet, dass** die absorbierte Intensität des Energiestrahls durch eine Variation seiner Strahlleistung und/oder des Strahldurchmessers, insbesondere der Fokuslage bei einem Laserstrahl, und/oder der absobierten Energie, insbesondere der Polarisation bei einem Laserstrahl, und/oder der räumlichen und zeitlichen Lage des Laserstrahls sowie der räumlichen und zeitlichen Intensitätsverteilung innerhalb des Laserstrahls, und/oder des Einstrahlwinkels, geändert wird.

3. Überlappschweißverfahren nach einem der Ansprüche 1 oder 2, **dadurch gekennzeichnet, dass** die Intensität des Energiestrahls mit der jeweiligen Anregungsfrequenz variiert wird und/oder eine bestimmte kontinuierliche oder variable Intensität durch eine mit der Anregungsfrequenz variablen Intensität überlagert wird.

4. Überlappschweißverfahren nach einem der Ansprüche 1 bis 3, **dadurch gekennzeichnet, dass** für einen konkreten Schweißfall mit bestimmten Randbedingungen, eine Eigenfrequenz - bevorzugt die Resonanzfrequenz oder eine andere verbundene Frequenz- der Dampfkapillare als lokales Maximum einer Übertragungsfunktion empirisch ermittelt wird.

5. Überlappschweißverfahren nach einem der Ansprüche 1 bis 4, **dadurch gekennzeichnet, dass** die Breite des Frequenzfensters um die jeweilige Eigenfrequenz, in dem die Anregungsfrequenz variiert, etwa um eine Zehnerpotenz geringer ist als die Größe der gewählten Eigenfrequenz.

6. Überlappschweißverfahren nach einem der Ansprüche 1 bis 4, **dadurch gekennzeichnet, dass** die Breite des Frequenzfensters um die jeweilige Eigenfrequenz 400 Hz, bevorzugt 200 Hz und besonders bevorzugt 100 Hz ist.

7. Überlappschweißverfahren nach einem der Ansprüche 1 bis 6, **dadurch gekennzeichnet, dass** die Variation der Anregungsfrequenz innerhalb des Frequenzfensters durch eine zeitlich periodisch in einem Variationszyklus verlaufende Frequenzverschiebung erfolgt.

8. Überlappschweißverfahren nach Anspruch 7, **dadurch gekennzeichnet, dass** die Frequenzverschiebung durch eine auf die Eigenfrequenz modulierte Änderungsfrequenz erfolgt.

9. Überlappschweißverfahren nach Anspruch 7 oder Anspruch 8, **dadurch gekennzeichnet, dass** die Zeit für einen periodischen Variationszyklus in der Größenordnung von Millisekunden liegt.

10. Überlappschweißverfahren nach einem der Ansprüche 1 bis 6, **dadurch gekennzeichnet, dass** für die Variation der Anregungsfrequenz ein Zufallsgenerator vorgesehen ist, der sukzessive auf jeweils eine von vorbestimmten Frequenzen aus dem Frequenzfenster nach dem Zufallsprinzip weiterschaltet.

11. Überlappschweißverfahren nach Anspruch 10, **dadurch gekennzeichnet, dass** durch einen dem Zufallsgenerator zugeordneten Zeitgeber in der Größenordnung von Mikrosekunden auf eine neue Anregungsfrequenz weitergeschaltet wird.

12. Überlappschweißverfahren nach Anspruch 10, **dadurch gekennzeichnet, dass** der Zufallsgenerator für die Weiterschaltung jeweils eine Zeitspanne aus einem Zeitfenster von 0-5 Millisekunden nach dem Zufallsprinzip auswählt.

13. Überlappschweißverfahren nach einem der Ansprüche 1 bis 12, **dadurch gekennzeichnet, dass** die beschichteten Bleche verzinkte Stahlbleche sind.

14. Überlappschweißverfahren nach einem der Ansprüche 1 bis 13, **dadurch gekennzeichnet, dass** als Strahlschweißverfahren ein Laserstrahlschweißverfahren mit einem CO₂-Laser oder mit einem Faserlaser oder mit einem Diodenlaser oder mit einem Festkörperlaser verwendet wird.

15. Überlappschweißverfahren nach einem der Ansprüche 1 bis 13, **dadurch gekennzeichnet, dass** als Strahlschweißverfahren das Elektronenstrahlschweißen oder das Plasmastrahlschweißen verwendet wird.

## Claims

1. Lap welding method by means of beam welding on coated metal sheets,
the coating having a significantly lower melting and vaporization or combustion temperature than the sheet material and at least one coated opposite surface with a joining gap being present in the overlapping region,
**characterized**
**in that** at least one reference joining gap comprising opposite surfaces that lie against one another in a planar or conformal manner is present in the overlapping and welding region,
**in that** the respective parameters of the energy beam are varied with an excitation frequency which lies in a frequency window about a specific excitation frequency of the vapour cavity formed in the molten pool during the welding operation and the excitation frequency is varied over time within this frequency window.

2. Lap welding method according to Claim 1, **characterized in that** the absorbed intensity of the energy beam is changed by a variation of its beam power and/or the beam diameter, in particular the focal position in the case of a laser beam, and/or the absorbed energy, in particular the polarization in the case of a laser beam, and/or the spatial and temporal position of the laser beam as well as the spatial and temporal intensity distribution within the laser beam, and/or the irradiating angle.

3. Lap welding method according to either of Claims 1 and 2, **characterized in that** the intensity of the energy beam is varied with the respective excitation frequency and/or a specific continuous or variable intensity is superimposed by an intensity that is variable with the excitation frequency.

4. Lap welding method according to one of Claims 1 to 3, **characterized in that**, for an actual welding case with specific boundary conditions, a natural frequency - preferably the resonant frequency or some other associated frequency - of the vapour cavity is empirically determined as a local maximum of a transfer function.

5. Lap welding method according to one of Claims 1 to 4, **characterized in that** the spread of the frequency window about the respective natural frequency in which the excitation frequency is varied is smaller by a power of ten than the size of the natural frequency chosen.

6. Lap welding method according to one of Claims 1 to 4, **characterized in that** the spread of the frequency window about the respective natural frequency is 400 Hz, preferably 200 Hz and particularly preferably 100 Hz.

7. Lap welding method according to one of Claims 1 to 6, **characterized in that** the variation of the excitation frequency within the frequency window is performed by a frequency shift proceeding periodically over time in a variation cycle.

8. Lap welding method according to Claim 7, **characterized in that** the frequency shift is performed by a change frequency modulated to the natural frequency.

9. Lap welding method according to Claim 7 or 8, **characterized in that** the time for a periodic variation cycle is of the order of milliseconds.

10. Lap welding method according to one of Claims 1 to 6, **characterized in that** a random generator which successively advances in each case to one of a number of predetermined frequencies from the frequency window on the basis of the random principle is provided for the variation of the excitation frequency.

11. Lap welding method according to Claim 10, **characterized in that** advancement to the new excitation frequency is effected in a time of the order of microseconds by the timer assigned to the random generator.

12. Lap welding method according to Claim 10, **characterized in that** the random generator selects in each case for the advancement a time span from a time window from 0 to 5 milliseconds on the basis of the random principle.

13. Lap welding method according to one of Claims 1 to 12, **characterized in that** the coated metal sheets are galvanized steel sheets.

14. Lap welding method according to one of Claims 1 to 13, **characterized in that** a laser beam welding method with a CO₂ laser or with a fibre laser or with a diode laser or with a solid-state laser is used as the beam welding method.

15. Lap welding method according to one of Claims 1 to 13, **characterized in that** electron beam welding or plasma beam welding is used as the beam welding method.

## Revendications

1. Procédé de soudage à recouvrement par soudage par rayonnement de tôles revêtues, dans lequel le revêtement présente une température de fusion et de vaporisation ou de combustion nettement moins élevée que le matériau des tôles et il se trouve dans la zone de recouvrement au moins une face opposée revêtue avec une fente de jonction, **caractérisé en ce qu'**il se trouve au moins une fente de jonction nulle avec des faces opposées plates ou de forme adaptée placées l'une contre l'autre dans la zone de recouvrement et de soudage, **en ce que** l'on fait varier les paramètres respectifs du rayonnement énergétique avec une fréquence d'excitation dans une fenêtre de fréquence autour d'une fréquence d'excitation spéciale du capillaire à vapeur formé dans le bain fondu pendant l'opération de soudage et on fait varier la fréquence d'excitation au cours du temps à l'intérieur de cette fenêtre de fréquence.

2. Procédé de soudage à recouvrement selon la revendication 1, **caractérisé en ce que** l'on modifie l'intensité absorbée du rayonnement énergétique par une variation de sa puissance de rayonnement et/ou du diamètre du rayonnement, en particulier de la position du foyer pour un faisceau laser, et/ou de l'énergie absorbée, en particulier de la polarisation pour un faisceau laser, et/ou de la position spatiale et temporelle du faisceau laser ainsi que de la distribution spatiale et temporelle de l'intensité à l'intérieur du faisceau laser, et/ou de l'angle d'incidence.

3. Procédé de soudage à recouvrement selon l'une quelconque des revendications 1 ou 2, **caractérisé en ce que** l'on fait varier l'intensité du rayonnement énergétique avec la fréquence d'excitation respective et/ou on superpose à une intensité continue ou variable déterminée une intensité variable avec la fréquence d'excitation.

4. Procédé de soudage à recouvrement selon l'une quelconque des revendications 1 à 3, **caractérisé en ce que**, pour un cas de soudage concret avec des conditions aux limites déterminées, on détermine empiriquement une fréquence propre - de préférence la fréquence de résonance ou une autre fréquence liée à celle-ci - du capillaire à vapeur comme maximum local d'une fonction de transfert.

5. Procédé de soudage à recouvrement selon l'une quelconque des revendications 1 à 4, **caractérisé en ce que** la largeur de la fenêtre de fréquence autour de la fréquence propre respective, dans laquelle la fréquence d'excitation varie, est inférieure d'environ une puissance de dix à la grandeur de la fréquence propre choisie.

6. Procédé de soudage à recouvrement selon l'une quelconque des revendications 1 à 4, **caractérisé en ce que** la largeur de la fenêtre de fréquence autour de la fréquence propre respective, est de 400 Hz, de préférence de 200 Hz et de préférence encore de 100 Hz.

7. Procédé de soudage à recouvrement selon l'une quelconque des revendications 1 à 6, **caractérisé en ce que** la variation de la fréquence d'excitation à l'intérieur de la fenêtre de fréquence est produite par un glissement de fréquence exécuté de façon périodique dans le temps dans un cycle de variation.

8. Procédé de soudage à recouvrement selon la revendication 7, **caractérisé en ce que** le glissement de fréquence est produit par une fréquence de variation modulée sur la fréquence propre.

9. Procédé de soudage à recouvrement selon la revendication 7 ou la revendication 8, **caractérisé en ce que** le temps nécessaire pour un cycle de variation périodique se situe dans l'ordre de grandeur des millisecondes.

10. Procédé de soudage à recouvrement selon l'une quelconque des revendications 1 à 6, **caractérisé en ce qu'**il est prévu, pour la variation de la fréquence d'excitation, un générateur aléatoire qui se connecte successivement, selon le principe du hasard, chaque fois sur une de fréquences prédéterminées de la fenêtre de fréquence.

11. Procédé de soudage à recouvrement selon la revendication 10, **caractérisé en ce que** l'on connecte sur une nouvelle fréquence d'excitation dans l'ordre de grandeur des microsecondes au moyen d'une horloge associée au générateur aléatoire.

12. Procédé de soudage à recouvrement selon la revendication 10, **caractérisé en ce que** le générateur aléatoire sélectionne selon le principe du hasard, pour la connexion, chaque fois un laps de temps dans une fenêtre de temps de 0 - 5 millisecondes.

13. Procédé de soudage à recouvrement selon l'une quelconque des revendications 1 à 12, **caractérisé en ce que** les tôles revêtues sont des tôles d'acier galvanisées.

14. Procédé de soudage à recouvrement selon l'une quelconque des revendications 1 à 13, **caractérisé en ce que** l'on utilise, comme procédé de soudage par rayonnement, un procédé de soudage par faisceau laser avec un laser CO₂ ou avec un laser à fibre ou avec un laser diode ou avec un laser à l'état solide.

15. Procédé de soudage à recouvrement selon l'une quelconque des revendications 1 à 13, **caractérisé en ce que** l'on utilise, comme procédé de soudage par rayonnement, le soudage par faisceau d'électrons ou le soudage plasma.
